# EUROPEAN PATENT APPLICATION

(11) **EP 4 524 908 A1**
(43) Date of publication of application: **19.03.2025**
(21) Application number: 23382941.5
(22) Date of filing: 18.09.2023
(51) Int. Cl.: G06V 20/52, G06T 7/20, G06V 10/82

(54) **FLIGHT PREPARATION EVENT DETECTION**

(71) Applicant: The Boeing Company, Arlington, VA 22202 (US)
(72) Inventor: BÜDDEFELD, Michael Christian, 63263 Neu-Isenburg (DE); COCKS, Stuart, 63263 Neu-Isenburg (DE); CORNEL, Miriam, 63263 Neu-Isenburg (DE); MUÑOZ HERNÁNDEZ, Andrés, 80805 Munich (DE); STERLING, Millie Irene, 65183 Wiesbaden (DE)
(74) Representative: ZBM Patents - Zea, Barlocci & Markvardsen

(57) **Abstract**

A device includes one or more processors configured to obtain bounding box data indicating a first location history of a first bounding box associated with a first object detected in images. The one or more processors are also configured to process, using a trained model, at least the first location history to detect an event associated with flight preparation of an aircraft. The one or more processors are further configured to generate an output indicating the event.

## Description

### FIELD OF THE DISCLOSURE

The present disclosure is generally related to flight preparation event detection.

### BACKGROUND

Aircraft turnaround delay refers to the amount of time that an aircraft is delayed on the ground between flights. It is any unplanned time included in the time period that an aircraft spends on the ground between the time it lands and the time it takes off again. Turnaround delays can occur due to various factors, including weather conditions, mechanical issues, ground handling delays, air traffic congestion, and other operational issues.

Delays can have a cascading effect on an airline's schedule and can cause missed connections, resulting in unhappy customers, reduced revenue, and increased costs. Reducing turnaround times is an important factor for airlines as it can increase efficiency, reduce costs, and improve the overall passenger experience.

### SUMMARY

In a particular implementation, a device includes one or more processors configured to obtain bounding box data indicating a first location history of a first bounding box associated with a first object detected in images. The one or more processors are also configured to process, using a trained model, at least the first location history to detect an event associated with flight preparation of an aircraft. The one or more processors are further configured to generate an output indicating the event.

In another particular implementation, an aircraft includes one or more processors configured to obtain bounding box data indicating a first location history of a first bounding box associated with a first object detected in images. The one or more processors are also configured to process, using a trained model, at least the first location history to detect an event associated with flight preparation of the aircraft. The one or more processors are further configured to generate an output indicating the event.

In another particular implementation, a method includes obtaining, at a device, bounding box data indicating a first location history of a first bounding box associated with a first object detected in images. The method also includes processing, using a trained model, at least the first location history to detect an event associated with flight preparation of an aircraft. The method further includes generating, at the device, an output indicating the event.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 is a diagram that illustrates a system configured to detect flight preparation events.
FIG. 2 is a diagram of a particular example of flight preparation event detection that may be performed by the system of FIG. 1.
FIG. 3 is a diagram of another example of flight preparation event detection that may be performed by the system of FIG. 1.
FIG. 4 is a diagram of another example of flight preparation event detection that may be performed by the system of FIG. 1.
FIG. 5 is a diagram of another example of flight preparation event detection that may be performed by the system of FIG. 1.
FIG. 6 is a diagram that illustrates a system configured to perform aircraft turnaround management based on detected flight preparation events.
FIG. 7 is a diagram of a particular example of flight preparation events.
FIG. 8 is a diagram that illustrates a flow chart of an example of method of flight preparation event detection.
FIG. 9 is a flowchart illustrating an example of a life cycle of an aircraft including a flight preparation system.
FIG. 10 is a block diagram of a particular implementation of an aircraft including a flight preparation system.
FIG. 11 is a block diagram of a computing environment including a computing device configured to support aspects of computer-implemented methods and computer-executable program instructions (or code) according to the present disclosure.

### DETAILED DESCRIPTION

Aspects disclosed herein present systems and methods for flight preparation event detection. Flight preparation delays can cause aircraft turnaround delays, which can have a significant impact on an airline's operations. Delays can lead to missed connections, increased operating costs, and unhappy customers. Flight preparation delays can be caused by a variety of factors, such as delays in baggage handling, aircraft cleaning and maintenance, fueling, catering, passenger boarding, etc.

According to some aspects, a flight preparation event detector receives a sequence of images (e.g., a live stream) from cameras that are configured to capture a scene at an aircraft stand. The flight preparation event detector performs object detection to determine whether any object of interest is detected in one or more of the images. An object of interest can include an aircraft, a fuel truck, a catering truck, an airbridge, a ground staff member, or any visually detectible resource that is used to perform an aircraft turnaround.

According to some aspects, the flight preparation event detector generates bounding box data indicating a location history of a bounding box of the object. For example, the flight preparation event detector detects the object in a first image and determines that a bounding box of the object has a first location in the first image. The flight preparation event detector detects the object in a second image and determines that the bounding box of the object has a second location in the second image. The location history includes the first location and the second location indicating a path of the object. The flight preparation event detector processes the location history (e.g., the bounding box data) to determine whether a flight preparation event is detected. For example, the location history indicating a particular path of an aircraft corresponds to arrival of the aircraft at the aircraft stand. The flight preparation event detector generates an output based on the detected event. For example, the output indicates that arrival of the aircraft is detected at a particular aircraft stand.

Early detection of a predicted delay can enable an aircraft turnaround management system to initiate actions to prevent the delay or initiate actions to reduce any adverse impacts of the delay. For example, the aircraft turnaround management system, in response to determining that aircraft arrival has been detected but fuel truck arrival has not been detected, can generate an alert indicating that a fuel truck is requested at the aircraft stand. As another example, the aircraft turnaround management system, based on determining that arrival of the fuel truck at the aircraft stand is detected at a particular time, determine a predicted delay based on an expected refueling duration and a target off-block time. The aircraft turnaround management system can, based on the predicted delay, initiate reassignment of crew that are going to miss a subsequent flight, check for availability of subsequent flights for passengers that are going to miss connecting flights, etc.

The figures and the following description illustrate specific exemplary embodiments. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

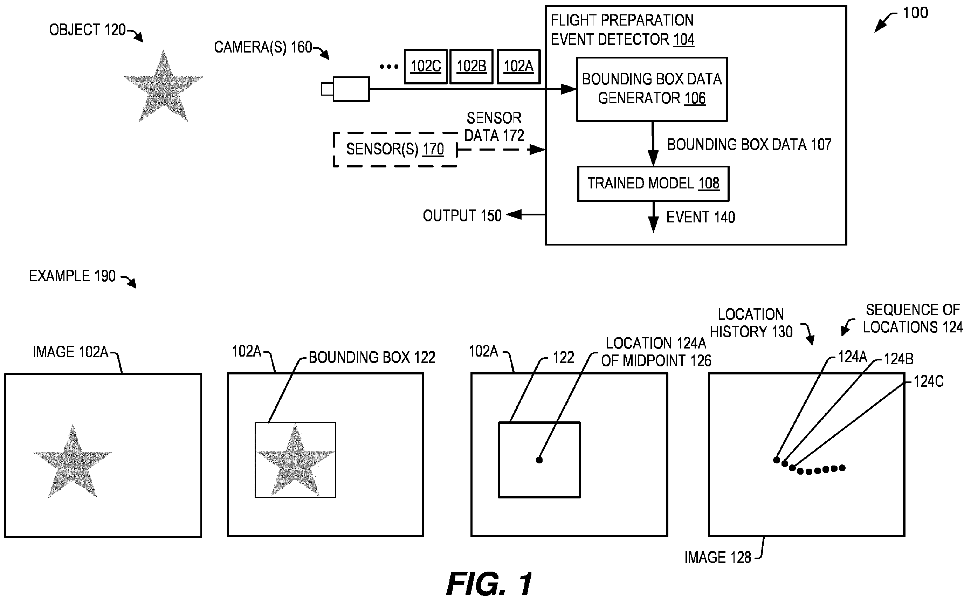

Particular implementations are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 1, multiple images are illustrated and associated with reference numbers 102A, 102B, and 102C. When referring to a particular one of these images, such as the image 102A, the distinguishing letter "A" is used. However, when referring to any arbitrary one of these images or to these images as a group, the reference number 102 is used without a distinguishing letter.

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a system 100 including one or more cameras ("camera(s)" 160 in FIG. 1), which indicates that in some implementations the system 100 includes a single camera 160 and in other implementations the system 100 includes multiple cameras 160. For ease of reference herein, such features are generally introduced as "one or more" features, and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 depicts an example of a system 100 that is configured to detect flight preparation events. The system 100 includes a flight preparation event detector 104 coupled to one or more cameras 160. Optionally, in some implementations, the flight preparation event detector 104 is also coupled to one or more sensors 170.

In some aspects, the flight preparation event detector 104, the one or more cameras 160, the one or more sensors 170, or a combination thereof, are interconnected via one or more networks to enable data communications. For example, the flight preparation event detector 104 is coupled to the one or more cameras 160, the one or more sensors 170, or both, via one or more wireless networks, one or more wireline networks, or any combination thereof. Two or more of the flight preparation event detector 104, the one or more cameras 160, and the one or more sensors 170 can be co-located or geographically distributed from each other.

The flight preparation event detector 104 can be coupled to (e.g., installed or integrated into) an aircraft, a ground control system, an airline management system, or a combination thereof. The one or more cameras 160 can be coupled to (e.g., mounted on or integrated into) an airport building, an airbridge, an aircraft, a vehicle, or a combination thereof. In some aspects, the one or more cameras 160 are configured to capture a scene at an aircraft stand of an airport. For example, the one or more cameras 160 are configured to generate (e.g., livestream) a sequence of images 102 capturing the scene at the aircraft stand. In some examples, the images 102 correspond to a video or a sequence of still images.

Optionally, in some implementations, the one or more sensors 170 can be installed on (e.g., mounted on or integrated into) an airport building, an airbridge, an aircraft, a vehicle, or a combination thereof. For example, the one or more sensors 170 can include a door sensor indicating whether a door of an aircraft is open. As another example, the one or more sensors 170 can include a fuel sensor indicating a fuel level of an aircraft.

The flight preparation event detector 104 includes a bounding box data generator 106 coupled to a trained model 108 (e.g., a trained neural network). The bounding box data generator 106 is configured to generate bounding box data 107 indicating a location history 130 of a bounding box 122 of an object 120 detected in the images 102. For example, the location history 130 indicates a path of the object 120. The bounding box data generator 106 is configured to provide the bounding box data 107 to the trained model 108. In an example, the flight preparation event detector 104 processes, using the trained model 108, at least the location history 130 to detect an event 140 associated with flight preparation of an aircraft. The flight preparation event detector 104 is configured to generate an output 150 indicating the event 140.

In an illustrative, non-limiting example, the object 120 includes the aircraft, a fuel truck, a baggage cart, a de-icing truck, a catering truck, a pushback tug, a snow plow, an airstair, an air bridge, an apron bus, a belt loader, a container loader, a water truck, a lavatory service vehicle, a ground power unit, an air start unit, or a fire truck. In some examples, the object 120 can include any object or person associated with flight preparation of the aircraft. To illustrate, in some aspects, the object 120 can include a baggage handler. The flight preparation event detector 104 can detect that the object 120 corresponds to a person having a particular role (e.g., a baggage handler) associated with flight preparation based on performing face recognition, uniform recognition, badge detection, etc., on at least one of the images 102.

It should be understood that the flight preparation event detector 104 including the bounding box data generator 106 generating the bounding box data 107 indicating the path of the object 120 is provided as an illustrative example. In other implementations, the flight preparation event detector 104 can include another type of path detector that processes the images 102 to generate path data indicating the path of the object 120, and uses the trained model 108 to process the path data to detect the event 140.

During operation, the flight preparation event detector 104 receives a sequence of images 102 from the one or more cameras 160. In an example, an aircraft is expected to arrive at an aircraft stand of an airport at an expected in-block time. The one or more cameras 160 capture a scene at the aircraft stand. In a particular aspect, the flight preparation event detector 104 starts receiving the sequence of images 102 from the one or more cameras 160 at a first time that is a first duration (e.g., 10 minutes) prior to the expected in-block time. In a particular aspect, the first duration corresponds to pre-arrival events that are planned to occur prior to the aircraft arrival at the aircraft stand. In some implementations, the flight preparation event detector 104 determines the first duration based on a configuration setting, a user input, timing data associated with pre-arrival events, or a combination thereof.

The flight preparation event detector 104 performs object detection on one or more of the images 102 to determine whether an object of interest is detected. In an example 190, the flight preparation event detector 104 performs object detection on an image 102A and determines that an object 120 is detected. The flight preparation event detector 104 determines whether the object 120 corresponds to an object of interest. For example, the flight preparation event detector 104 determines whether the object 120 matches an object indicated by flight preparation data as associated with one or more flight preparation events, matches an object of interest detected in a previous image 102, or both.

The bounding box data generator 106 determines a bounding box 122 of the object 120 in the image 102A. The bounding box data generator 106 determines a location 124A of the bounding box 122 in the image 102A. In some implementations, the location 124A of the bounding box 122 corresponds to a location of a midpoint 126 of the bounding box 122. In other implementations, the location 124A can correspond to another location associated with the bounding box 122. The bounding box data generator 106 updates a location history 130 associated with the object 120 to indicate that the bounding box 122 has the location 124A at a time (e.g., a receipt time, a generation time, etc.) associated with the image 102A.

Similarly, the bounding box data generator 106 determines additional locations of the bounding box 122 in one or more subsequent images of the sequence of images 102. For example, the flight preparation event detector 104 performs object detection on the image 102B to detect the object 120 in the image 102B and the bounding box data generator 106 determines that the bounding box 122 of the object 120 has a location 124B in the image 102B. As another example, the flight preparation event detector 104 detects the object 120 in the image 102C and the bounding box data generator 106 determines that the bounding box 122 of the object 120 has a location 124C in an image 102C, and so on. In some cases, as the object 120 moves closer or further away from the one or more cameras 160, the bounding box 122 can have a different size, a different shape, or both, in different images (e.g., the image 102A, the image 102B, the image 102C, etc.) in which the object 120 is detected.

The bounding box data generator 106 generates bounding box data 107 indicating the location history 130 of the bounding box 122. The location history 130 is based on a sequence of locations 124 (e.g., the location 124A, the location 124B, the location 124C, etc.) of the bounding box 122. The sequence of locations 124 indicates a path of the bounding box 122. For example, the sequence of locations 124 indicates a path of the midpoint 126 of the bounding box 122. The path of the bounding box 122 corresponds to an estimate of a path of the object 120. In some implementations, the bounding box data 107 includes the sequence of locations 124, an image 128 indicating the sequence of locations 124, or both. In some implementations, the bounding box data generator 106 determines (e.g., using best-fit analysis), based on the sequence of locations 124, a line indicating an estimated path of the bounding box 122. The bounding box data 107 includes data, an image, or both, representing the line (e.g., the estimated path).

The bounding box data generator 106 provides the bounding box data 107 to the trained model 108. For example, the flight preparation event detector 104 uses the trained model 108 to process at least the location history 130 to determine whether an event 140 is detected. In a particular aspect, the event 140 includes at least one of: arrival of the aircraft, departure of the aircraft, arrival of a truck, departure of the truck, a change in a configuration of the truck, start of refueling, end of refueling, start of baggage loading, end of baggage loading, start of de-icing, end of de-icing, opening of a door of the aircraft, closing of the door of the aircraft, start of meal loading, end of meal loading, passenger embarkation, passenger disembarkation, extension of a bridge, or retraction of the bridge.

In a particular aspect, the trained model 108 is trained to detect whether the location history 130 indicates a location pattern that matches historical location patterns associated with the event 140. For example, in some implementations, the flight preparation event detector 104 updates the trained model 108 (e.g., updates weights and biases of the trained model 108) based on tagged training data of multiple aircraft flight preparation events. To illustrate, the tagged training data includes a first location history of a first bounding box of a first object indicating a first historical location pattern, and the first location history is tagged as associated with a first event (e.g., arrival of an aircraft). In some implementations, the flight preparation event detector 104 trains the trained model 108 to detect a location history that indicates a location pattern matching the first historical location pattern as associated with an event of the same event type (e.g., aircraft arrival) as the first event.

In some examples, an event can be associated with location histories of bounding boxes of multiple objects. To illustrate, the tagged training data can include a second location history of a second bounding box of a second object indicating a second historical location pattern, and the second location history is also tagged as associated with the first event. In some implementations, the flight preparation event detector 104 is configured to train the trained model 108 to determine that a first location history that indicates a first location pattern matching the first historical location pattern and a second location history that indicates a second location pattern matching the second historical location pattern are associated with an event of the same event type as the first event.

In some examples, the tagged training data includes location histories tagged with multiple events of the same event type. For example, the tagged training data includes a third location history of a third bounding box of a third object indicating a third historical location pattern, and the third location history is tagged as associated with a second event (e.g., arrival of a second aircraft) that is of the same event type (e.g., aircraft arrival) as an event type of the first event (e.g., arrival of a first aircraft). The flight preparation event detector 104 can train the trained model 108 to determine that a first location history that indicates a first location pattern matching the first historical location pattern or the third historical location pattern as associated with an event of the same event type as the first event. In some implementations, having the trained model 108 trained on multiple location histories tagged with multiple events of the same event type enables the trained model 108 to give more weight to common features of the multiple location histories associated with that event type.

In some examples, the tagged training data includes location histories tagged with multiple events of multiple event types. For example, the tagged training data includes a fourth location history of a fourth bounding box of a fourth object indicating a fourth location pattern, and the fourth location history is tagged as associated with a third event (e.g., arrival of a fuel truck) that is of an event type (e.g., fuel truck arrival) that is different from a first event type (e.g., aircraft arrival) of the first event (e.g., arrival of a first aircraft). The trained model 108 is thus trained to detect multiple types of events.

In a particular aspect, the flight preparation event detector 104 processes, using the trained model 108, at least the location history 130 to detect the event 140 associated with flight preparation of an aircraft. In some examples, the flight preparation event detector 104 processes location histories of bounding boxes of multiple objects to detect that the event 140 is detected. For example, the flight preparation event detector 104 processes the location history 130 and a second location history of a second bounding box of a second object to determine that the event 140 is detected. In some examples, the flight preparation event detector 104 can process the same location history to detect multiple events. For example, the flight preparation event detector 104 processes at least the location history 130 to determine that the event 140 is detected, and processes the location history 130 and a third location history of a third bounding box of a third object to determine that a second event associated with flight preparation of the aircraft is detected.

The flight preparation event detector 104 generates an output 150 indicating that the event 140 is detected. For example, the output 150 indicates that the event 140 is detected at a first time at the aircraft stand. In some examples, the flight preparation event detector 104 generates a second output indicating that the second event is detected. The flight preparation event detector 104 provides the output 150 to one or more devices, such as the aircraft, an aircraft turnaround management system, a ground control system, an airline management system, or a combination thereof. For example, the flight preparation event detector 104 provides the output 150 to the one or more devices as events are detected. To illustrate, the flight preparation event detector 104 provides, at a first time, the output 150 indicating that the event 140 is detected. The flight preparation event detector 104 provides, at a second time, the output 150 indicting that the second event is detected, and so on.

Optionally, in some implementations, the flight preparation event detector 104 receives sensor data 172 from the one or more sensors 170. The flight preparation event detector 104 generates the output 150 based at least in part on determining whether the event 140 matches the sensor data 172. For example, the flight preparation event detector 104 selectively generates an alert based on determining whether the sensor data 172 indicates the event 140. To illustrate, in response to determining that the sensor data 172 indicates that a door of an aircraft is closed while the event 140 indicates that passenger embarkation has initiated, the output 150 can include an alert to verify whether a door sensor is malfunctioning. As another example, in response to determining that the sensor data 172 indicates that an amount of fuel in an aircraft is not changing while the event 140 indicates that a fuel truck is connected to the aircraft for at least a threshold duration and appears to have initiated re-fueling of the aircraft, the output 150 can include an alert to verify that the fuel truck has initiated re-fueling, that the fuel sensor is functioning properly, or both.

It should be understood that the sensor data 172 indicating whether a door is open or an amount of fuel are provided as illustrative examples. In other examples, the sensor data 172 can indicate various types of information. To illustrate, the sensor data 172 can indicate a detected position of an adaptable wing of an aircraft. For example, the adaptable wing can include a foldable wingtip, and a configuration of the foldable wingtip (e.g., having a folded position or an extended position) may be verified prior to aircraft departure from the aircraft stand. The flight preparation event detector 104 can generate an alert in response to determining that the trained model 108 indicates that an event 140 corresponding to an extended position of the adaptable wing is detected and that the sensor data 172 indicates that the adaptable wing has the folded position.

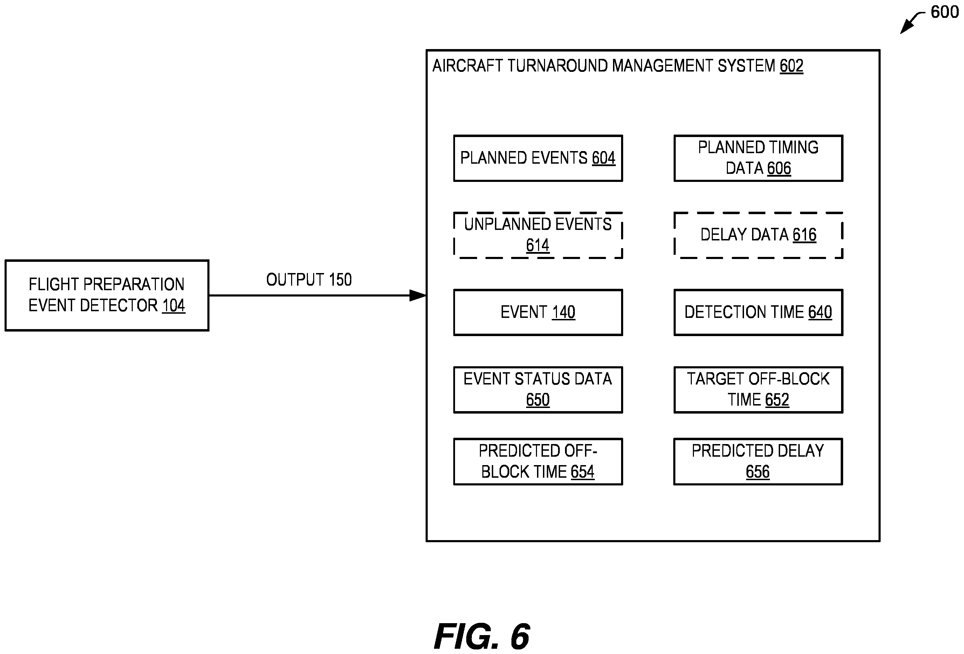

A technical advantage of automatically detecting the event 140 based on the sequence of images 102 can include reduced human error and reduced delay in detecting and responding to the event 140. In an example, an aircraft turnaround management system can determine that the event 140 corresponds to a predicted delay, as further described with reference to FIG. 6. The aircraft turnaround management system can initiate actions to reduce (e.g., prevent) the predicted delay, reduce impacts of the predicted delay, or both.

In some implementations, the flight preparation event detector 104 can be represented in hardware, such as via an application-specific integrated circuit (ASIC) or a field-programmable gate array (FPGA), or the operations described with reference to the elements may be performed by a processor executing computer-readable instructions.

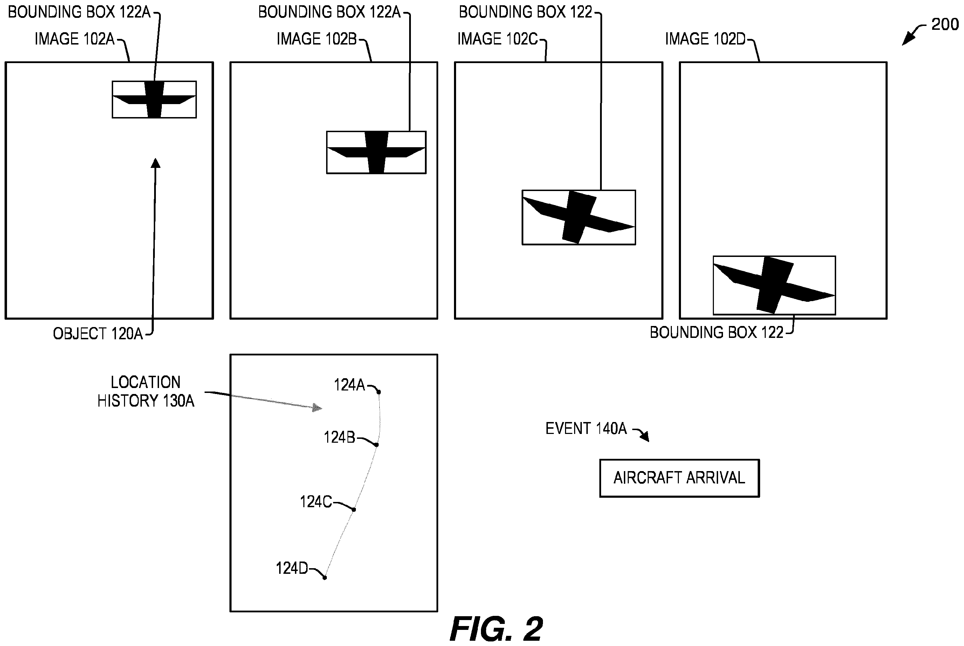

Referring to FIG. 2, an example 200 is shown of flight preparation event detection that may be performed by the system 100 of FIG. 1, such as when the flight preparation event detector 104 performs object recognition to detect an object 120A in a first image subset of the sequence of images 102.

In an example, the first image subset includes an image 102A, an image 102B, an image 102C, and an image 102D. It should be understood that the first image subset including four images is provided as an illustrative example. In other examples, the first image subset can include fewer than four images or more than four images.

The bounding box data generator 106 generates bounding box data 107 indicating a location history 130A of a bounding box 122A of the object 120A. For example, the location history 130A indicates the location 124A of the bounding box 122A in the image 102A, the location 124B of the bounding box 122A in the image 102B, the location 124C of the bounding box 122A in the image 102C, and the location 124D of the bounding box 122A in the image 102D. In an example, the bounding box data 107 indicates the location history 130A of the object 120A from a first time (e.g., a capture time, a receipt time, or both) associated with the image 102A to a second time (e.g., a capture time, a receipt time, or both) associated with the image 102D.

In a particular aspect, the bounding box data 107 indicates the locations 124A-D. In a particular aspect, the bounding box data 107 indicates a path that is based on the locations 124A-D. In a particular aspect, the bounding box data 107 includes an image of the path. As shown in FIG. 2, a size and shape of the bounding box 122A can change from one image to the next as the object 120A moves closer or further away from the one or more cameras 160.

The flight preparation event detector 104 processes, using the trained model 108, at least the location history 130A to detect an event 140A (e.g., aircraft arrival). For example, the flight preparation event detector 104 provides a first object type (e.g., aircraft) of the object 120A and the location history 130A (e.g., the path, the locations 124A-D, or both) as input to the trained model 108, and the trained model 108 generates an output indicating the event 140A (e.g., aircraft arrival).

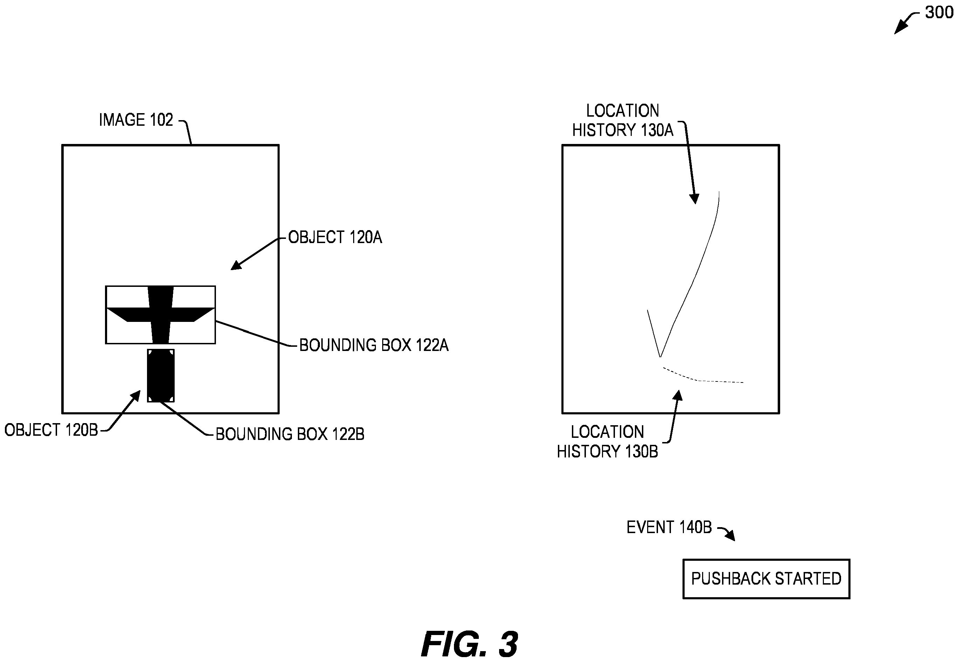

Referring to FIG. 3, an example 300 is shown of flight preparation event detection that may be performed by the system 100 of FIG. 1. The bounding box data generator 106 generates (e.g., updates) the bounding box data 107 indicating the location history 130A of the bounding box 122A of the object 120A (e.g., the aircraft) and a location history 130B of a bounding box 122B of an object 120B (e.g., a pushback tug).

In an example, the flight preparation event detector 104 performs object detection to detect the object 120A and the object 120B in a second image subset of the sequence of images 102. In a particular aspect, the second image subset corresponds to images from the second time to a third time.

In some examples, the object 120A, the object 120B, or both, can be detected in one or more images of the second image subset. To illustrate, the second image subset can include at least one image in which both the object 120A and the object 120B are detected, at least one image in which a single one of the object 120A or the object 120B is detected, at least one image in which neither of the object 120A or the object 120B is detected, or a combination thereof. In the example 300, the object 120A and the object 120B are both detected in at least one same image of the second image subset.

The bounding box data generator 106 updates the bounding box data 107 to indicate the location history 130A of the bounding box 122A of the object 120A in the second image subset. The location history 130A thus indicates a path of the object 120A from the first time to the third time. The bounding box data generator 106 also updates the bounding box data 107 to indicate the location history 130B of the bounding box 122B of the object 120B in the second image subset. The location history 130B thus indicates a path of the object 120B from the second time to the third time.

The flight preparation event detector 104 processes, using the trained model 108, at least the location history 130A and the location history 130B to detect an event 140B (e.g., pushback started). For example, the flight preparation event detector 104 provides the first object type (e.g., aircraft) of the object 120A and the location history 130A associated with the first object type as a first input to the trained model 108, provides a second object type (e.g., a pushback tug) of the object 120B and the location history 130B associated with the second object type as a second input to the trained model 108, and the trained model 108 generates an output indicating the event 140B (e.g., pushback started).

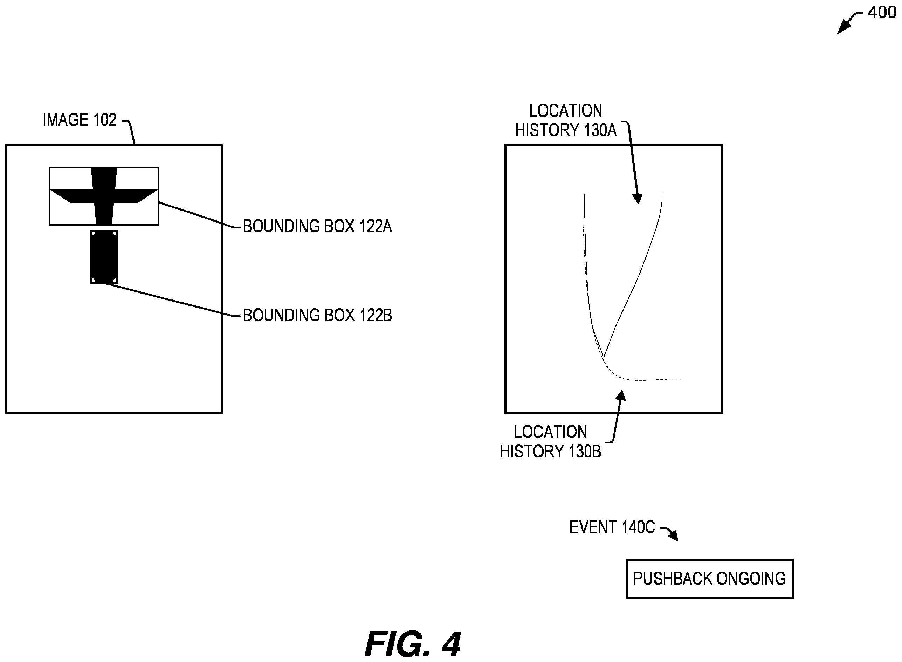

Referring to FIG. 4, an example 400 is shown of flight preparation event detection that may be performed by the system 100 of FIG. 1. The bounding box data generator 106 generates (e.g., updates) the bounding box data 107 indicating the location history 130A of the bounding box 122A of the object 120A and the location history 130B of the bounding box 122B of the object 120B.

In an example, the flight preparation event detector 104 performs object detection to detect the object 120A and the object 120B in a third image subset of the sequence of images 102. In a particular aspect, the third image subset corresponds to images from the third time to a fourth time.

In some examples, the object 120A, the object 120B, or both, can be detected in one or more images of the third image subset. To illustrate, the third image subset can include at least one image in which both the object 120A and the object 120B are detected, at least one image in which a single one of the object 120A or the object 120B is detected, at least one image in which neither of the object 120A or the object 120B is detected, or a combination thereof. In the example 400, the object 120A and the object 120B are both detected in at least one same image of the third image subset.

The bounding box data generator 106 updates the bounding box data 107 to indicate the location history 130A of the bounding box 122A of the object 120A in the third image subset. The location history 130A thus indicates a path of the object 120A from the first time to the fourth time. The bounding box data generator 106 also updates the bounding box data 107 to indicate the location history 130B of the bounding box 122B of the object 120B in the third image subset. The location history 130B thus indicates a path of the object 120B from the second time to the fourth time.

The flight preparation event detector 104 processes, using the trained model 108, at least the location history 130A and the location history 130B to detect an event 140C (e.g., pushback ongoing). For example, the flight preparation event detector 104 provides the first object type (e.g., aircraft) of the object 120A and the location history 130A associated with the first object type as a first input to the trained model 108, provides the second object type (e.g., a pushback tug) of the object 120B and the location history 130B associated with the second object type as a second input to the trained model 108, and the trained model 108 generates an output indicating the event 140C (e.g., pushback ongoing).

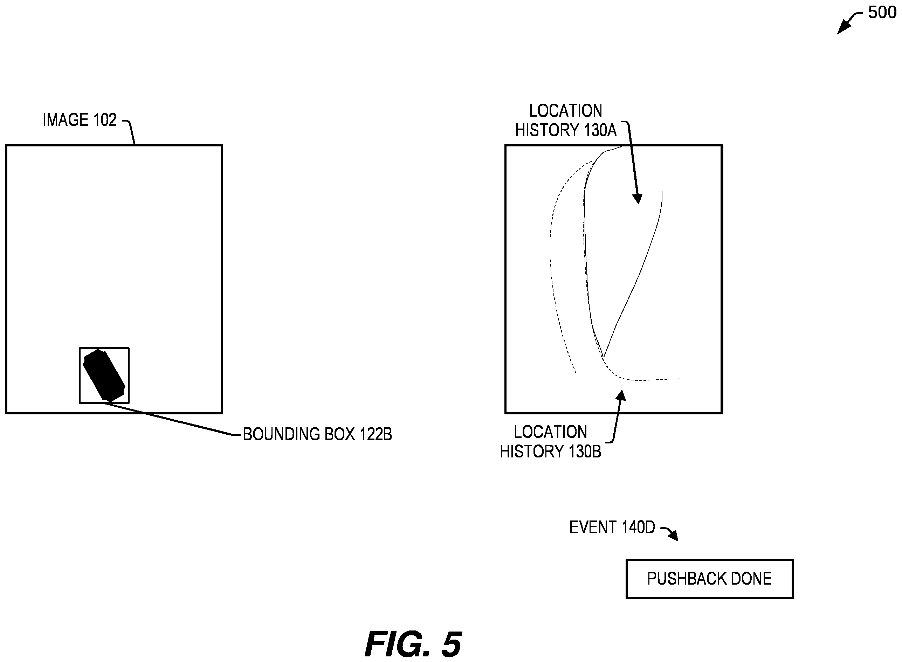

Referring to FIG. 5, an example 500 is shown of flight preparation event detection that may be performed by the system 100 of FIG. 1. The bounding box data generator 106 generates (e.g., updates) the bounding box data 107 indicating the location history 130A of the bounding box 122A of the object 120A and the location history 130B of the bounding box 122B of the object 120B.

In an example, the flight preparation event detector 104 performs object detection to detect the object 120A and the object 120B in a fourth image subset of the sequence of images 102. In a particular aspect, the fourth image subset corresponds to images from the fourth time to a sixth time, with the object 120A leaving the field of view of the one or more cameras 160 at a fifth time that is between the fourth time and the sixth time. In the example 500, the object 120A is not detected and the object 120B is detected in at least one image of the fourth image subset. For example, the image 102 is captured subsequent to the fifth time.

The bounding box data generator 106 updates the bounding box data 107 to indicate the location history 130A of the bounding box 122A of the object 120A in the fourth image subset. The location history 130A thus indicates a path of the object 120A from the first time to the fifth time. The bounding box data generator 106 also updates the bounding box data 107 to indicate the location history 130B of the bounding box 122B of the object 120B in the fourth image subset. The location history 130B thus indicates a path of the object 120B from the second time to the sixth time.

The flight preparation event detector 104 processes, using the trained model 108, at least the location history 130A and the location history 130B to detect an event 140D (e.g., pushback done). For example, the flight preparation event detector 104 provides the first object type (e.g., aircraft) of the object 120A and the location history 130A associated with the first object type as a first input to the trained model 108, provides the second object type (e.g., a pushback tug) of the object 120B and the location history 130B associated with the second object type as a second input to the trained model 108, and the trained model 108 generates an output indicating the event 140D (e.g., pushback done).

It should be understood that particular location histories and corresponding events described with reference to FIGS. 2-5 are provided as an illustrative example. In other examples, the trained model 108 is trained to process various types of location histories to detect various types of events.

FIG. 6 depicts an example of a system 600 that is configured to perform aircraft turnaround management based on detected flight preparation events. In a particular aspect, the system 100 of FIG. 1 includes one or more components of the system 600.

The system 600 includes an aircraft turnaround management system 602 coupled to the flight preparation event detector 104. Although the flight preparation event detector 104 is illustrated as external to the aircraft turnaround management system 602, in some examples the aircraft turnaround management system 602 can include the flight preparation event detector 104.

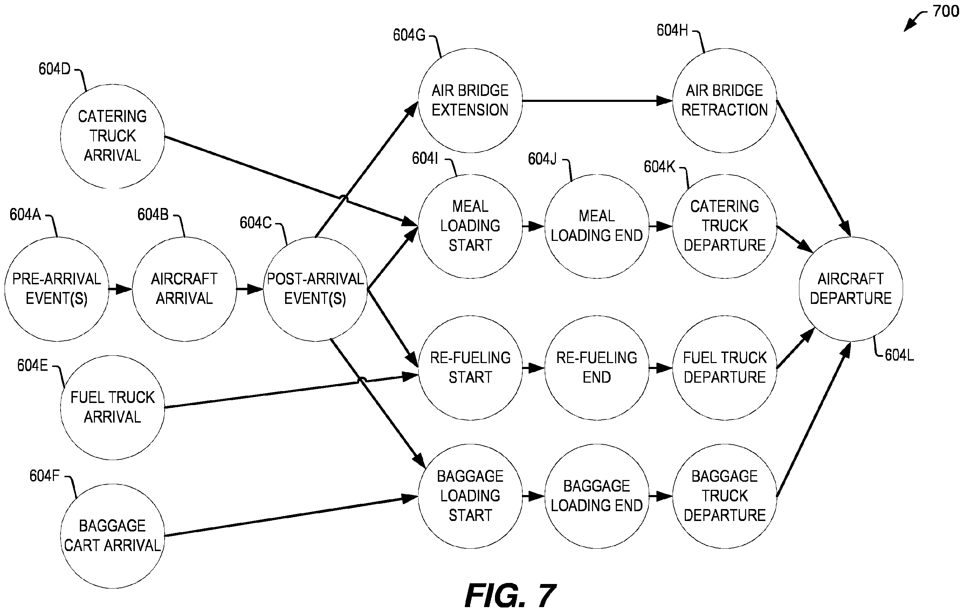

The aircraft turnaround management system 602 has access to data indicating planned events 604 associated with flight preparation for an aircraft, as further described with reference to FIG. 7. The aircraft turnaround management system 602 also has access to planned timing data 606 indicating planned timing of the planned events 604. In some examples, the planned timing data 606 indicates which of the planned events 604 have to be performed sequentially. To illustrate, the planned timing data 606 indicates that a baggage loading start event is dependent on a baggage cart arrival event having occurred. In some examples, the planned timing data 606 indicates a planned duration associated with a particular event or associated with transitioning from one event to another event. To illustrate, the planned timing data 606 indicates a planned duration between transitioning from the baggage loading start event to a baggage loading end event.

Optionally, in some implementations, the aircraft turnaround management system 602 has access to delay data 616 indicating typical delays associated with unplanned events 614. To illustrate, the delay data 616 can indicate that an unplanned event 614 (e.g., a piece of luggage falling off the luggage cart prior to the bagging loading end event) corresponds to a typical delay predicted to extend a typical duration associated with loading baggage (e.g., extending a planned amount of time from the baggage loading start event to the baggage loading end event).

The aircraft turnaround management system 602 receives, from the flight preparation event detector 104, the output 150 indicating that the event 140 is detected, as described with reference to FIG. 1. In a particular aspect, the output 150 also indicates a detection time 640 of the event 140. In another aspect, a receipt time of the output 150 corresponds to the detection time 640 of the event 140.

The aircraft turnaround management system 602 tracks the planned events 604. Optionally, in some implementations, the aircraft turnaround management system 602 also tracks whether any unplanned events 614 occur. For example, the aircraft turnaround management system 602, in response to receiving the output 150 indicating the event 140, updates event status data 650 to indicate that the event 140 is detected at the detection time 640. The event 140 can be included in the planned events 604 or the unplanned events 614.

The aircraft turnaround management system 602 determines a predicted delay 656 based on the event status data 650 and the planned timing data 606, the delay data 616, or both. In an example, the aircraft turnaround management system 602 has access to a target off-block time 652 for an aircraft. According to some aspects, the target off-block time 652 refers to a time that the aircraft is expected to depart from the aircraft stand for an on-time departure. The aircraft turnaround management system 602 determines a predicted off-block time 654 based on the event status data 650 and the planned timing data 606, the delay data 616, or both. For example, the aircraft turnaround management system 602, in response to determining that the event 140 has the detection time 640 and that the planned timing data 606 indicates a planned duration associated one or more remaining events of the planned events 604, determines the predicted off-block time 654 based on (e.g., a sum of) the detection time 640 and the planned duration. In another example, the aircraft turnaround management system 602, in response to determining that at least one of the unplanned events 614 is detected, adjusts the predicted off-block time 654 based on a corresponding delay indicated by the delay data 616. The aircraft turnaround management system 602 determines the predicted delay 656 based on a comparison of (e.g., a difference between) the predicted off-block time 654 and the target off-block time 652.

In some implementations, the aircraft turnaround management system 602 initiates one or more actions based on the detection time 640, the predicted off-block time 654, the predicted delay 656, or a combination thereof. In some implementations, the one or more actions can include at least one preventative action to reduce the predicted off-block time 654. In some implementations, the one or more actions can include at least one delay management action to reduce consequences of the predicted delay 656.

In an example, the aircraft turnaround management system 602, in response to determining that the event 140 has the detection time 640 and that the planned timing data 606 indicates a particular planned duration for transitioning from the event 140 to a subsequent second event, determines an expected detection time of the second event. The aircraft turnaround management system 602, in response to determining that the event status data 650 indicates that the second event has not been detected by the expected detection time, initiates one or more actions. For example, the one or more actions can include generating an alert, sending a request, reassigning a task associated with the second event, etc.

In an example, the aircraft turnaround management system 602, in response to determining that the predicted off-block time 654 is within a threshold duration of the target off-block time 652 or that the predicted delay 656 is greater than a first delay threshold (e.g., greater than zero), initiates one or more actions. For example, the one or more actions can include generating an alert, sending a request, reassigning one or more tasks associated with remaining ones of the planned events 604, or a combination thereof. In some implementations, the one or more actions can include changing crew assignments for subsequent flights, canceling passenger bookings on connecting flights that are likely to be missed, adding passenger bookings on alternative connecting flights, alerting ground staff to prioritize transfer of passengers to connecting flights that are within a threshold duration of a predicted delayed arrival time of the aircraft at a destination, or a combination thereof.

A technical advantage of automatically detecting the event 140 based on the sequence of images 102 can include reduced human error and reduced delay in detecting and responding to the event 140. In an example, the aircraft turnaround management system 602, based on determining that the event 140 corresponds to the detection time 640, can initiate one or more actions to reduce the predicted off-block time 654, reduce impacts of the predicted delay 656 (if any), or both.

Referring to FIG. 7, an example 700 is shown of flight preparation events. In some aspects, the example 700 includes one or more of the planned events 604 of FIG. 6. To illustrate, the example 700 indicates some of the planned events 604 that have to be completed prior to aircraft departure.

The example 700 includes one or more pre-arrival events 604A that are followed by aircraft arrival 604B, which is followed by one or more post-arrival events 604C. The one or more pre-arrival events 604A are expected to occur prior to the aircraft arrival 604B. The aircraft arrival 604B corresponds to arrival of an aircraft at an aircraft stand. The one or more post-arrival events 604C are expected to occur subsequent to the aircraft arrival 604B.

As an example, the one or more pre-arrival events 604A can include a safety inspection of the area of the aircraft stand by a dispatcher to verify that the area is clear of debris. To illustrate, the trained model 108, in response to processing an image 102 representing a dispatcher uniform, a person included in a list of dispatchers, a tag indicating that the person is a dispatcher, or a combination thereof, detects an event 140 corresponding to a safety inspection. As an example, the one or more post-arrival events 604C can include placing chocks around the wheels of the aircraft.

The example 700 includes some events that can occur prior to, at the same time as, or subsequent to the aircraft arrival 604B. To illustrate, the example 700 includes catering truck arrival 604D, fuel truck arrival 604E, and baggage cart arrival 604F.

The example 700 includes air bridge extension 604G that is dependent on the one or more post-arrival events 604C (e.g., chocks placement) having occurred. To illustrate, the trained model 108, in response to processing an image 102A representing a retracted air bridge and an image 102B indicating at least a partially extended air bridge, detects an event 140 corresponding to the air bridge extension 604G. The example 700 also includes air bridge retraction 604H subsequent to the air bridge extension 604G.

The example 700 includes some events that are dependent on multiple events having occurred. To illustrate, the example 700 includes meal loading start 604I that is dependent on the one or more post-arrival events 604C and the catering truck arrival 604D having occurred. In some implementations, the trained model 108, in response to processing an image 102A indicating a first configuration (e.g., corresponding to a lowered cargo hold) of a catering truck and an image 102B indicating a second configuration (e.g., corresponding to a raised cargo hold) of the catering truck, detects an event 140 corresponding to the meal loading start 6041. The meal loading start 604I is followed by meal loading end 604J that is followed by catering truck departure 604K. In some implementations, the trained model 108, in response to processing an image 102C indicating the first configuration of the catering truck (e.g., the cargo hold has been returned to its lowered position), detects an event 140 corresponding to the meal loading end 604J. The trained model 108 can thus detect events at least partially based on a detected configuration (e.g., a shape) of an object 120.

In an example, the aircraft turnaround management system 602 of FIG. 6, in response to determining that the meal loading start 604I (e.g., an event 140) has a first detection time and that the planned timing data 606 indicates a particular planned duration for transitioning from the meal loading start 6041 to the meal loading end 604J, determines an expected detection time of the meal loading end 604J. The aircraft turnaround management system 602, in response to determining that the event status data 650 of FIG. 6 indicates that the meal loading end 604J has not been detected by the expected detection time, initiates one or more actions. For example, the one or more actions can include generating an alert, sending a request, reassigning a task associated with the meal loading end 604J, etc.

In an example, the aircraft turnaround management system 602 performs critical path analysis of the planned events 604 to identify one or more particular events included in one or more critical paths to the aircraft departure 604L. For example, a first planned duration between the air bridge extension 604G and the aircraft departure 604L can be less than a second planned duration between the meal loading start 604I and the aircraft departure 604L. As a result, a first expected completion time of a first path from the air bridge extension 604G to the aircraft departure 604L is less than a second completion time of a second path from the meal loading start 604I to the aircraft departure 604L. If the second completion time is higher than completion times of other paths to the aircraft departure 604L, the second path (e.g., the meal loading start 604I, the meal loading end 604J, and the catering truck departure 604K) corresponds to a critical path to the aircraft departure 604L.

Non-critical paths have tolerance for small delays. For example, a delay along the second path (e.g., the meal loading start 604I) can cause a delay in the predicted off-block time 654, whereas the same delay in the first path (e.g., the air bridge extension 604G) might not cause any delay in the predicted off-block time 654 if the expected completion time of the first path remains less than an expected completion time of the second path.

In some implementations, the aircraft turnaround management system 602 prioritizes preventing delays in events that are included in one or more critical paths. For example, the aircraft turnaround management system 602, in response to determining that the catering truck arrival 604D is included in a critical path and that the fuel truck arrival 604E is included in a non-critical path, initiates one or more operations that prioritize the catering truck arrival 604D over the fuel truck arrival 604E. To illustrate, if a first driver is available to drive either a catering truck or a fuel truck to the aircraft stand, the aircraft turnaround management system 602 assigns the first driver to drive the catering truck, whereas the fuel truck is assigned to a next available driver.

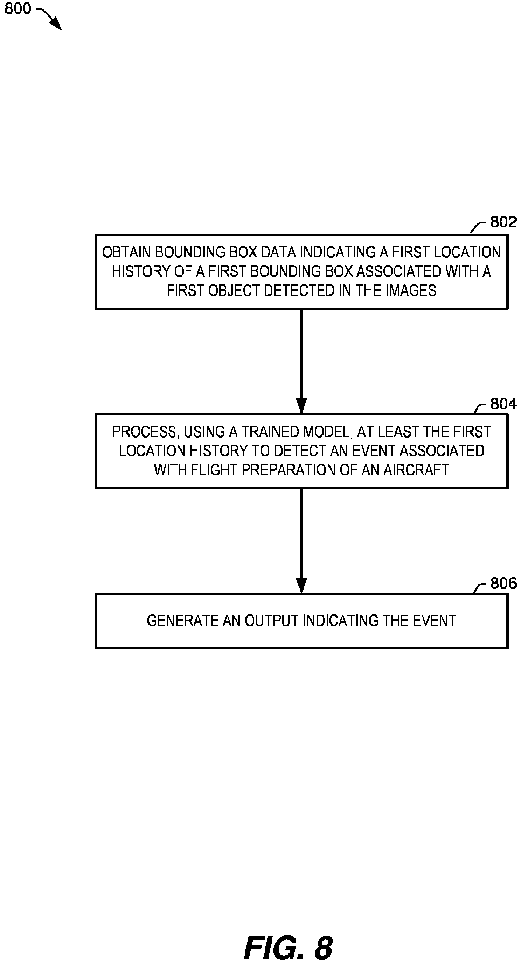

Referring to FIG. 8, a particular implementation of a method 800 of flight preparation event detection is shown. In a particular aspect, one or more operations of the method 800 are performed by at least one of the flight preparation event detector 104, the system 100 of FIG. 1, the aircraft turnaround management system 602, the system 600 of FIG. 6, or a combination thereof.

The method 800 includes obtaining bounding box data indicating a first location history of a first bounding box associated with a first object detected in the images, at 802. For example, the bounding box data generator 106 obtains the bounding box data 107 indicating a location history 130 of a bounding box 122 associated with an object 120 detected in one or more of the sequence of images 102, as described with reference to FIG. 1.

The method 800 also includes processing, using a trained model, at least the first location history to detect an event associated with flight preparation of an aircraft, at 804. For example, the flight preparation event detector 104 processes, using the trained model 108, at least the location history 130 to detect an event 140 associated with flight preparation of an aircraft, as described with reference to FIG. 1.

The method 800 further includes generating an output indicating the event, at 806. For example, the flight preparation event detector 104 generates an output 150 indicating the event 140, as described with reference to FIG. 1.

A technical advantage of automatically detecting the event 140 based on the sequence of images 102 can include reduced human error and reduced delay in detecting and responding to the event 140. In an example, the aircraft turnaround management system 602 of FIG. 6 can determine that the event 140 corresponds to a predicted delay 656, as described with reference to FIG. 6. The aircraft turnaround management system can initiate actions to reduce (e.g., prevent) the predicted delay 656, reduce impacts of the predicted delay 656, or both.

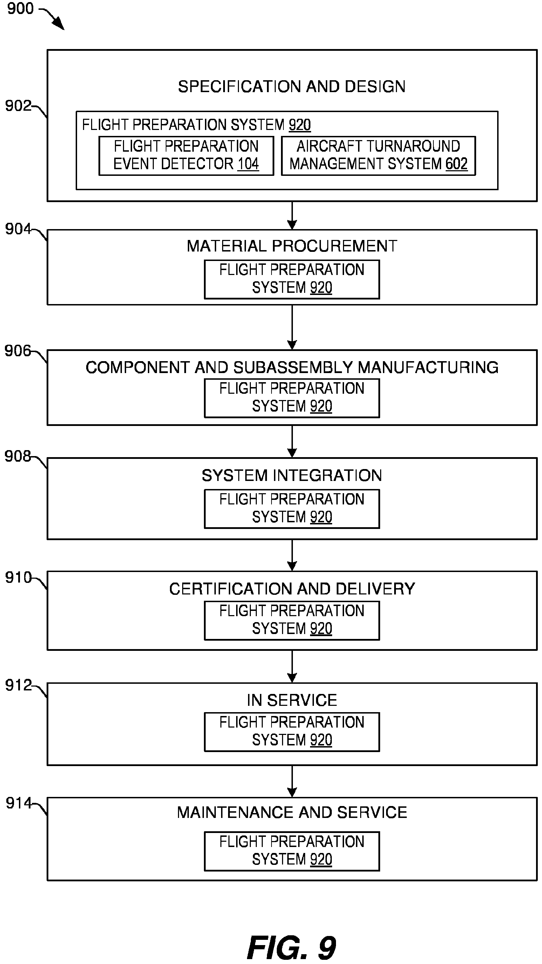

Referring to FIG. 9, a flowchart 900 is shown that is illustrative of a life cycle of an aircraft that is configured to perform flight preparation event detection. During pre-production, the exemplary method 900 includes, at 902, specification and design of an aircraft. During specification and design of the aircraft, the method 900 may include specification and design of a flight preparation system 920. The flight preparation system 920 includes the flight preparation event detector 104, the aircraft turnaround management system 602, or both. At 904, the method 900 includes material procurement, which may include procuring materials for the flight preparation system 920.

During production, the method 900 includes, at 906, component and subassembly manufacturing and, at 908, system integration of the aircraft. For example, the method 900 may include component and subassembly manufacturing of the flight preparation system 920 and system integration of the flight preparation system 920. At 910, the method 900 includes certification and delivery of the aircraft and, at 912, placing the aircraft in service. Certification and delivery may include certification of the flight preparation system 920 to place the flight preparation system 920 in service. While in service by a customer, the aircraft may be scheduled for routine maintenance and service (which may also include modification, reconfiguration, refurbishment, and so on). At 914, the method 900 includes performing maintenance and service on the aircraft, which may include performing maintenance and service on the flight preparation system 920.

Each of the processes of the method 900 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

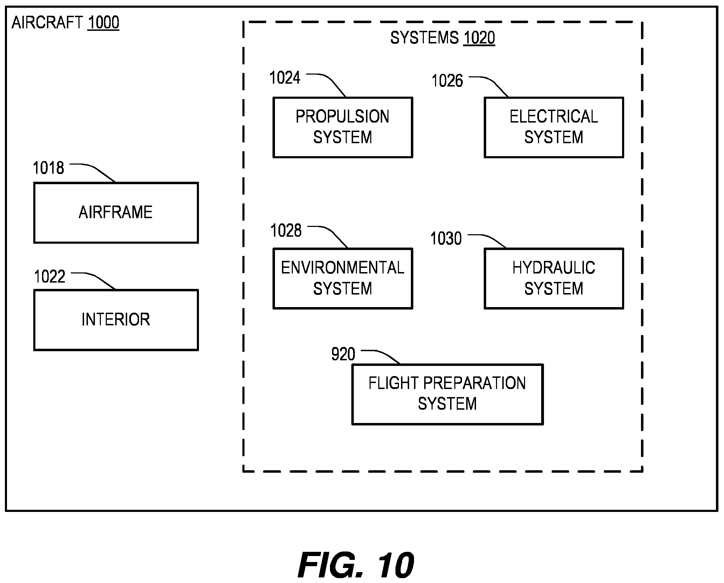

Aspects of the disclosure can be described in the context of an example of a vehicle. A particular example of a vehicle is an aircraft 1000 as shown in FIG. 10.

In the example of FIG. 10, the aircraft 1000 includes an airframe 1018 with a plurality of systems 1020 and an interior 1022. Examples of the plurality of systems 1020 include one or more of a propulsion system 1024, an electrical system 1026, an environmental system 1028, a hydraulic system 1030, and the flight preparation system 920. Any number of other systems may be included.

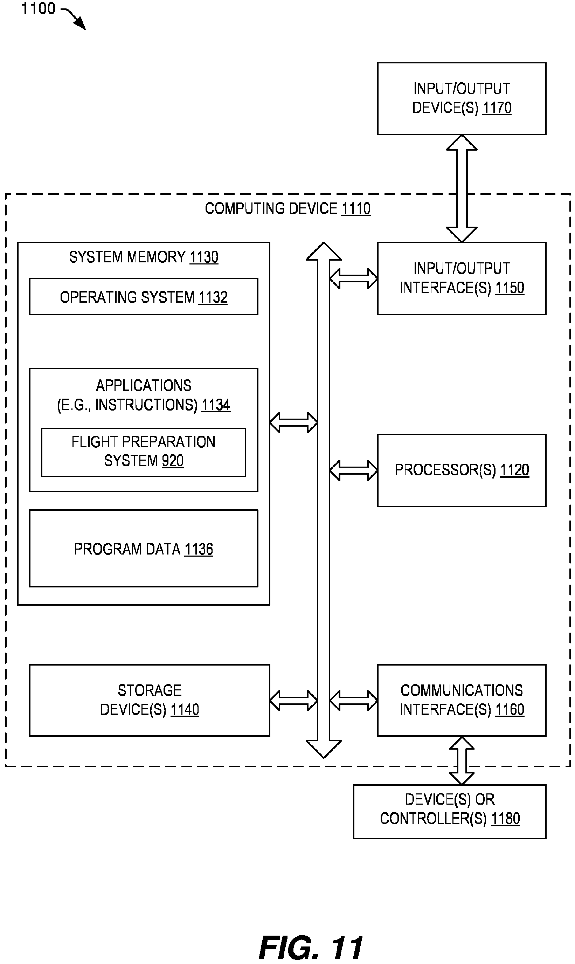

FIG. 11 is a block diagram of a computing environment 1100 including a computing device 1110 configured to support aspects of computer-implemented methods and computer-executable program instructions (or code) according to the present disclosure. For example, the computing device 1110, or portions thereof, is configured to execute instructions to initiate, perform, or control one or more operations described with reference to FIGS. 1-10.

The computing device 1110 includes one or more processors 1120. The processor(s) 1120 are configured to communicate with system memory 1130, one or more storage devices 1140, one or more input/output interfaces 1150, one or more communications interfaces 1160, or any combination thereof. The system memory 1130 includes volatile memory devices (e.g., random access memory (RAM) devices), nonvolatile memory devices (e.g., read-only memory (ROM) devices, programmable read-only memory, and flash memory), or both. The system memory 1130 stores an operating system 1132, which may include a basic input/output system for booting the computing device 1110 as well as a full operating system to enable the computing device 1110 to interact with users, other programs, and other devices. The system memory 1130 stores system (program) data 1136, such as one or more of the sequence of images 102, the sensor data 172, the bounding box data 107, the event 140, the output 150, the location history 130, or a combination thereof. For example, the program data 1136 can include any data used or generated by the system 100, the system 600, or both, as described herein.

The system memory 1130 includes one or more applications 1134 (e.g., sets of instructions) executable by the processor(s) 1120. In a particular aspect, the one or more applications 1134 include the flight preparation system 920. As an example, the one or more applications 1134 include instructions executable by the processor(s) 1120 to initiate, control, or perform one or more operations described with reference to FIGS. 1-10. To illustrate, the one or more applications 1134 include instructions executable by the processor(s) 1120 to initiate, control, or perform one or more operations described with reference to the flight preparation system 920.

In some implementations, the processor(s) 1120 can be implemented as a single processor or as multiple processors, such as in a multi-core configuration, a multi-processor configuration, a distributed computing configuration, a cloud computing configuration, or any combination thereof. In some implementations, one or more portions of the flight preparation system 920 are implemented by the processor(s) 1120 using dedicated hardware, firmware, or a combination thereof.

In a particular implementation, the system memory 1130 includes a non-transitory, computer readable medium storing the instructions that, when executed by the processor(s) 1120, cause the processor(s) 1120 to initiate, perform, or control operations to perform flight preparation event detection. The operations include obtaining bounding box data (e.g., the bounding box data 107) indicating a first location history (e.g., the location history 130) of a first bounding box (e.g., a bounding box 122) associated with a first object (e.g., an object 120) detected in images (e.g., one or more of a sequence of images 102). The operations also include processing, using a trained model (e.g., the trained model 108), at least the first location history to detect an event (e.g., an event 140) associated with flight preparation of an aircraft. The operations further include generating an output (e.g., the output 150) indicating the event.

The one or more storage devices 1140 include nonvolatile storage devices, such as magnetic disks, optical disks, or flash memory devices. In a particular example, the storage devices 1140 include both removable and non-removable memory devices. The storage devices 1140 are configured to store an operating system, images of operating systems, applications (e.g., one or more of the applications 1134), and program data (e.g., the program data 1136). In a particular aspect, the system memory 1130, the storage devices 1140, or both, include tangible computer-readable media. In a particular aspect, one or more of the storage devices 1140 are external to the computing device 1110.

The one or more input/output interfaces 1150 enable the computing device 1110 to communicate with one or more input/output devices 1170 to facilitate user interaction. For example, the one or more input/output interfaces 1150 can include a display interface, an input interface, or both. For example, the input/output interface 1150 is adapted to receive input from a user, to receive input from another computing device, or a combination thereof. In some implementations, the input/output interface 1150 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device 1170 includes one or more user interface devices and displays, including some combination of buttons, keyboards, pointing devices, displays, speakers, microphones, touch screens, and other devices.

The processor(s) 1120 are configured to communicate with devices or controllers 1180 via the one or more communications interfaces 1160. For example, the one or more communications interfaces 1160 can include a network interface. The devices or controllers 1180 can include, for example, the flight preparation event detector 104, the one or more cameras 160, the one or more sensors 170, the aircraft turnaround management system 602, an aircraft, a vehicle, a computing device, a communication device, a ground control device, one or more other devices, or any combination thereof.

In conjunction with the described systems and methods, an apparatus for performing flight preparation event detection is disclosed that includes means for obtaining bounding box data indicating a first location history of a first bounding box associated with a first object detected in images. In some implementations, the means for obtaining corresponds to the bounding box data generator 106, the flight preparation event detector 104, the system 100 of FIG. 1, the computing device 1110, the processor(s) 1120, one or more other circuits or devices configured to obtain bounding box data, or a combination thereof.

The apparatus also includes means for processing, using a trained model, at least the first location history to detect an event associated with flight preparation of an aircraft. In some implementations, the means for processing corresponds to the trained model 108, the flight preparation event detector 104, the system 100 of FIG. 1, the computing device 1110, the processor(s) 1120, one or more other circuits or devices configured to process location history using a trained model, or a combination thereof.

The apparatus further includes means for generating an output indicating the event. In some implementations, the means for generating corresponds to the flight preparation event detector 104, the system 100 of FIG. 1, the computing device 1110, the processor(s) 1120, one or more other circuits or devices configured to generate the output, or a combination thereof.

In some implementations, a non-transitory, computer readable medium stores instructions that, when executed by one or more processors, cause the one or more processors to initiate, perform, or control operations to perform part or all of the functionality described above. For example, the instructions may be executable to implement one or more of the operations or methods of FIGS. 1-11. In some implementations, part or all of one or more of the operations or methods of FIGS. 1-11 may be implemented by one or more processors (e.g., one or more central processing units (CPUs), one or more graphics processing units (GPUs), one or more digital signal processors (DSPs)) executing instructions, by dedicated hardware circuitry, or any combination thereof.

Particular aspects of the disclosure are described below in sets of interrelated Examples:
According to Example 1, a device includes one or more processors configured to obtain bounding box data indicating a first location history of a first bounding box associated with a first object detected in images; process, using a trained model, at least the first location history to detect an event associated with flight preparation of an aircraft; and generate an output indicating the event.
Example 2 includes the device of Example 1, wherein the bounding box data includes a first image indicating a first path of a first midpoint of the first bounding box.
Example 3 includes the device of Example 1 or Example 2, wherein the bounding box data includes a first sequence of locations indicating a first path of the first bounding box.
Example 4 includes the device of any of Examples 1 to 3, wherein the one or more processors are configured to receive the images from a camera that captures a scene at an aircraft stand at an airport.
Example 5 includes the device of any of Examples 1 to 4, wherein the one or more processors are configured to receive the images from a camera coupled to the aircraft.
Example 6 includes the device of any of Examples 1 to 5, wherein the one or more processors are configured to perform object detection on the images to: detect the first object; and generate the first bounding box.
Example 7 includes the device of any of Examples 1 to 6, wherein the event corresponds to one of a plurality of events that are tracked by an aircraft turnaround management system, and wherein the aircraft turnaround management systems updates a status of the event based on the output.
Example 8 includes the device of Example 7, wherein the aircraft turnaround management system determines a predicted delay based on the status of the event and planned timing data associated with the plurality of events.
Example 9 includes the device of any of Examples 1 to 8, wherein the bounding box data includes a second location history of a second bounding box associated with a second object detected in the images, and wherein the one or more processors are configured to process, using the trained model, the first location history and the second location history to detect the event.
Example 10 includes the device of any of Examples 1 to 9, wherein the bounding box data includes a third location history of a third bounding box associated with a third object detected in the images; and wherein the one or more processors are configured to process, using the trained model, the first location history and the third location history to detect a second event associated with the flight preparation of the aircraft; and generate a second output indicating the second event.
Example 11 includes the device of any of Examples 1 to 10, wherein the one or more processors are configured to update the trained model based on tagged training data of multiple aircraft flight preparation events.
Example 12 includes the device of any of Examples 1 to 11, wherein the trained model is trained to detect a particular location pattern corresponding to historical location patterns associated with the event.
Example 13 includes the device of any of Examples 1 to 12, wherein the event includes at least one of: arrival of the aircraft, departure of the aircraft, arrival of a truck, departure of the truck, a change in a configuration of the truck, start of refueling, end of refueling, start of baggage loading, end of baggage loading, start of de-icing, end of de-icing, opening of a door of the aircraft, closing of the door of the aircraft, start of meal loading, end of meal loading, passenger embarkation, passenger disembarkation, extension of a bridge, or retraction of the bridge.
Example 14 includes the device of any of Examples 1 to 13, wherein the one or more processors are configured to obtain additional sensor data; and selectively generate an alert based on determining whether the additional sensor data indicates the event.
Example 15 includes the device of any of Examples 1 to 14, wherein the first object includes the aircraft, a fuel truck, a baggage cart, a de-icing truck, a catering truck, a pushback tug, a snow plow, an airstair, an air bridge, an apron bus, a belt loader, a container loader, a water truck, a lavatory service vehicle, a ground power unit, an air start unit, or a fire truck.
According to Example 16, a method includes obtaining, at a device, bounding box data indicating a first location history of a first bounding box associated with a first object detected in images; processing, using a trained model, at least the first location history to detect an event associated with flight preparation of an aircraft; and generating, at the device, an output indicating the event.
Example 17 includes the method of Example 16, wherein the bounding box data includes a first image indicating a first path of a first midpoint of the first bounding box.
Example 18 includes the method of Example 16 or Example 17, wherein the bounding box data includes a first sequence of locations indicating a first path of the first bounding box.
Example 19 includes the method of any of Examples 16 to 18, further including receiving the images from a camera that captures a scene at an aircraft stand at an airport.
Example 20 includes the method of any of Examples 16 to 19, further including receiving the images from a camera coupled to the aircraft.
Example 21 includes the method of any of Examples 16 to 20, further including performing object detection on the images to: detect the first object; and generating the first bounding box.
Example 22 includes the method of any of Examples 16 to 21, wherein the event corresponds to one of a plurality of events that are tracked by an aircraft turnaround management system, and wherein the aircraft turnaround management systems updates a status of the event based on the output.
Example 23 includes the method of Example 22, further including determining, by the aircraft turnaround management system, a predicted delay based on the status of the event and planned timing data associated with the plurality of events.
Example 24 includes the method of any of Examples 16 to 23, further including processing, using the trained model, the first location history and a second location history to detect the event, wherein the bounding box data includes the second location history of a second bounding box associated with a second object detected in the images.
Example 25 includes the method of any of Examples 16 to 24, further including: processing, using the trained model, the first location history and a third location history to detect a second event associated with the flight preparation of the aircraft, wherein the bounding box data includes the third location history of a third bounding box associated with a third object detected in the images; and generating a second output indicating the second event.
Example 26 includes the method of any of Examples 16 to 25, further including updating the trained model based on tagged training data of multiple aircraft flight preparation events.
Example 27 includes the method of any of Examples 16 to 26, further including training the trained model to detect a particular location pattern corresponding to historical location patterns associated with the event.
Example 28 includes the method of any of Examples 16 to 27, wherein the event includes at least one of: arrival of the aircraft, departure of the aircraft, arrival of a truck, departure of the truck, a change in a configuration of the truck, start of refueling, end of refueling, start of baggage loading, end of baggage loading, start of de-icing, end of de-icing, opening of a door of the aircraft, closing of the door of the aircraft, start of meal loading, end of meal loading, passenger embarkation, passenger disembarkation, extension of a bridge, or retraction of the bridge.
Example 29 includes the method of any of Examples 16 to 28, wherein the one or more processors are configured to obtain additional sensor data; and selectively generate an alert based on determining whether the additional sensor data indicates the event.
Example 30 includes the method of any of Examples 16 to 29, wherein the first object includes the aircraft, a fuel truck, a baggage cart, a de-icing truck, a catering truck, a pushback tug, a snow plow, an airstair, an air bridge, an apron bus, a belt loader, a container loader, a water truck, a lavatory service vehicle, a ground power unit, an air start unit, or a fire truck.
According to Example 31, a device includes: a memory configured to store instructions; and a processor configured to execute the instructions to perform the method of any of Examples 16 to 30.
According to Example 32, a non-transitory computer-readable medium stores instructions that, when executed by a processor, cause the processor to perform the method of any of Examples 16 to 30.
According to Example 33, an apparatus includes means for carrying out the method of any of Examples 16 to 30.
According to Example 34, an aircraft includes one or more processors configured to: obtain bounding box data indicating a first location history of a first bounding box associated with a first object detected in images; process, using a trained model, at least the first location history to detect an event associated with flight preparation of the aircraft; and generate an output indicating the event.
Example 35 includes the aircraft of Example 34, wherein the one or more processors are configured to obtain additional sensor data; and selectively generate an alert based on determining whether the additional sensor data indicates the event.
Example 36 includes the aircraft of Example 34 or Example 35, further comprising a door, wherein the additional sensor data indicates whether the door is open.
Example 37 includes the aircraft of Example 35 or Example 36, further comprising at least an adaptable wing, wherein the additional sensor data indicates a detected position of the adaptable wing.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

## Claims

1. A device comprising:
one or more processors configured to:
obtain bounding box data indicating a first location history of a first bounding box associated with a first object detected in images;
process, using a trained model, at least the first location history to detect an event associated with flight preparation of an aircraft; and
generate an output indicating the event.

2. The device of claim 1, wherein the bounding box data includes a first image indicating a first path of a first midpoint of the first bounding box.

3. The device of claim 1 or claim 2, wherein the bounding box data includes a first sequence of locations indicating a first path of the first bounding box.

4. The device of any of claims 1 to 3, wherein the one or more processors are configured to receive the images from a camera that captures a scene at an aircraft stand at an airport.

5. The device of any of claims 1 to 4, wherein the one or more processors are configured to receive the images from a camera coupled to the aircraft.

6. The device of any of claims 1 to 5, wherein the one or more processors are configured to perform object detection on the images to:
detect the first object; and
generate the first bounding box.

7. The device of any of claims 1 to 6wherein the event corresponds to one of a plurality of events that are tracked by an aircraft turnaround management system, and wherein the aircraft turnaround management systems updates a status of the event based on the output.

8. The device of claim 7, wherein the aircraft turnaround management system determines a predicted delay based on the status of the event and planned timing data associated with the plurality of events.

9. The device of any of claims 1 to 8, wherein the bounding box data includes a second location history of a second bounding box associated with a second object detected in the images, and wherein the one or more processors are configured to process, using the trained model, the first location history and the second location history to detect the event.

10. The device of any of claims 1 to 9, wherein the bounding box data includes a third location history of a third bounding box associated with a third object detected in the images; and wherein the one or more processors are configured to:
process, using the trained model, the first location history and the third location history to detect a second event associated with the flight preparation of the aircraft; and
generate a second output indicating the second event.

11. The device of any of claims 1 to 10, wherein the one or more processors are configured to update the trained model based on tagged training data of multiple aircraft flight preparation events.

12. The device of any of claims 1 to 11, wherein the trained model is trained to detect a particular location pattern corresponding to historical location patterns associated with the event.

13. The device of any of claims 1 to 12, wherein the event includes at least one of: arrival of the aircraft, departure of the aircraft, arrival of a truck, departure of the truck, a change in a configuration of the truck, start of refueling, end of refueling, start of baggage loading, end of baggage loading, start of de-icing, end of de-icing, opening of a door of the aircraft, closing of the door of the aircraft, start of meal loading, end of meal loading, passenger embarkation, passenger disembarkation, extension of a bridge, or retraction of the bridge.

14. The device of any of claims 1 to 13, wherein the one or more processors are configured to:
obtain additional sensor data; and
selectively generate an alert based on determining whether the additional sensor data indicates the event.

15. A method comprising:
obtaining, at a device, bounding box data indicating a first location history of a first bounding box associated with a first object detected in images;
processing, using a trained model, at least the first location history to detect an event associated with flight preparation of an aircraft; and
generating, at the device, an output indicating the event.
